# EUROPÄISCHE PATENTANMELDUNG

(11) **EP 1 321 047 A2**
(43) Veröffentlichungstag der Anmeldung: **25.06.2003**
(21) Anmeldenummer: 02025890.1
(22) Anmeldetag: 20.11.2002
(51) Int. Cl.: A24B 3/08, A24C 5/39

(54) **Gurtbandförderer für einen Tabakzwischenspeicher, insbesondere Mischbox**

(30) Priorität: 19.12.2001 DE 10162718
(71) Anmelder: Hauni Maschinenbau AG, 21033 Hamburg (DE)
(72) Erfinder: Jakob, Manfred, 21502 Geesthacht (DE); Christ, Horst-Udo, 22359 Hamburg (DE)
(74) Vertreter: Seemann, Ralph, Dr. Dipl.-Phys.

(57) **Zusammenfassung**

Die Erfindung betrifft einen Gurtbandförderer (1) für einen Tabakzwischenspeicher, insbesondere Mischbox, mit wenigstens zwei parallel angeordneten Antriebsgliedern, die mittels wenigstens einer Querstrebe (3, 4) miteinander verbunden sind, und mit wenigstens einem zwischen den Antriebsgliedern angeordneten Gurtband (2). Die Erfindung ist dadurch gekennzeichnet, daß das Gurtband (2) lösbar mit wenigstens einer Querstrebe (4) verbunden ist.

Die Erfindung betrifft ferner eine Querstrebe (4) für einen Gurtbandförderer (1) eines Tabakzwischenspeichers, insbesondere Mischbox, wobei durch die Querstrebe (4) wenigstens zwei Antriebsglieder des Gurtbandförderers (1) verbindbar sind. Außerdem betrifft die Erfindung auch einen Tabakzwischenspeicher, insbesondere Mischbox, sowie eine Fördereinrichtung für eine Einrichtung der tabakverarbeitenden Industrie.

## Beschreibung

Die Erfindung betrifft einen Gurtbandförderer für einen Tabakzwischenspeicher, insbesondere Mischbox, mit wenigstens zwei parallel angeordneten Antriebsgliedern, die mittels wenigstens einer Querstrebe miteinander verbunden sind, und mit wenigstens einem zwischen den Antriebsgliedern angeordneten Gurtband. Die Erfindung betrifft ferner eine Querstrebe für einen Gurtbandförderer eines Tabakzwischenspeichers, insbesondere Mischbox, wobei durch die Querstrebe wenigstens zwei Antriebsglieder des Gurtbandförderers verbindbar sind. Außerdem betrifft die Erfindung einen Tabakzwischenspeicher, insbesondere Mischbox, sowie eine Fördereinrichtung für eine Einrichtung der tabakverarbeitenden Industrie.

Für die Zigarettenherstellung werden Mischboxen eingesetzt, die mit verschiedenen Tabaksorten beschickt werden. Durch die Mischung wird dafür gesorgt, daß das fertige Tabakerzeugnis eine gleichbleibende Mischungstreue und somit eine konstante, homogene Tabakmischung aufweist.

Zur Entnahme des gemischten Tabaks in der Mischbox, die eine Breite von bis zu 5 m und eine Länge bis zu 50 m besitzt, ist am Boden des Zwischenspeichers ein Gurtbandförderer angeordnet, der die im Zwischenspeicher befindliche Tabakmasse zu einem Dosierer weitertransportiert. Der Bandförderer wird mittels zweier Transportketten bewegt, wobei die Transportketten durch Traversen miteinander verbunden sind. Auf den Traversen ist ein Fördergurtband befestigt, auf dem die Tabakschichten in der Mischbox liegen. Das Gurtband ist mit den Traversen fest vernietet, so daß dieses das Tabakgut fördern kann.

Nachteilig bei den vorhandenen Gurtbandförderern ist, daß die Gurtbänder durch den Tabak und insbesondere das dem Tabak anhaftende Casing stark verschmutzen, so daß sich die Gurtbänder aufgrund der festen Nietverbindung zwischen Traverse und Gurtband schlecht reinigen lassen.

Aufgabe der vorliegenden Erfindung ist es daher, die Reinigung von Gurtbandförderern von Mischboxen zu erleichtern bzw. zu ermöglichen.

Die Aufgabe wird bei einem Gurtbandförderer dadurch gelöst, daß das Gurtband lösbar mit wenigstens einer Querstrebe verbunden ist. Durch die lösbare Verbindung zwischen Gurtband und Querstrebe, kann das Gurtband schnell und auf leichte Weise ausgetauscht werden. Ist das Gurtband auf dem Förderband verschmutzt, so kann das Gurtband umgehend durch ein sauberes Gurtband mit wenigen Handgriffen ersetzt werden. Im Gegensatz zum Stand der Technik ist es hierbei nicht erforderlich, daß die feste Vernietung zwischen Gurtband und Traverse bzw. Querstrebe mühsam gelöst werden muß.

Vorteilhafterweise ist wenigstens eine Querstrebe mit einer Klemmeinrichtung für das Gurtband versehen. Mittels der Klemmeinrichtung kann das Gurtband leicht und zuverlässig an bzw. in der Querstrebe befestigt werden. Nach Lösen der Klemmeinrichtung kann das Gurtband entnommen werden. Nach Einbringen eines neuen (gereinigten) Gurts wird die Klemmeinrichtung wieder arretiert.

Gemäß einer bevorzugten Ausführungsform ist die Klemmeinrichtung mittels wenigstens zweier, vorzugsweise gegeneinander bewegliche, Profile der Querstrebe ausgebildet. Die Querstrebe dient nicht nur zur Verbindung der Antriebsglieder, sondern hat darüber hinaus auch die Funktion zur Klemmung des Gurtbands. Insbesondere läßt sich durch die (gegenseitige) Beweglichkeit der Profile eine Art Klemmzange für den Bandgurt verwirklichen.

Damit das Fördergurtband eine ebene Fläche ohne Unebenheiten oder sonstige Erhebungen auf den Querstreben besitzt, ist vorteilhafterweise wenigstens ein Spalt in der Querstrebe vorgesehen, in den das Gurtband einbringbar ist.

Um die Klemmwirkung der Querstrebe noch weiter zu verbessern, ist in den Spalt ein Klemmteil einbringbar. Bei einer starken mechanischen Belastung des Gurtbands bewirkt das Klemmteil, daß das Band fest mit der Querstrebe verbunden bleibt. Das Klemmteil hat in diesem Fall die Funktion und Wirkung eines Sperrglieds, so daß das Band und/oder das Klemmteil bei Belastung festgehalten werden und sich nicht lösen können.

Weiterhin ist in einer bevorzugten Ausführungsform das Klemmteil wenigstens teilweise vom Gurtband umgeben.

Das Klemmteil kann in der Querstrebe zuverlässig positioniert und gehalten werden, wenn eine Halteeinrichtung für das Klemmteil ausgebildet ist.

Um nach einem Austausch des Gurtband das neue Gurtband zu straffen, ist eine Spanneinrichtung für das Gurtband, vorzugsweise in der Querstrebe, vorgesehen. Durch die Spanneinrichtung gelingt es, das Gurtband eben und stramm zu ziehen. Außerdem kann ein Gurtband im Gebrauch nachgespannt werden, so daß der Gurtbandförderer mit einem stets gespannten Gurtband betrieben werden kann.

Insbesondere ist es bevorzugt, wenn die Spanneinrichtung mit wenigstens einem Spannkonus ausgebildet ist. Durch einfache längsaxiale Translation des Konus kann das Gurtband gespannt werden. Die Spanneinrichtung besitzt neben der Spannfunktion gleichzeitig auch die Funktion einer Betätigungseinrichtung für die Klemmeinrichtung.

In einer vorteilhaften Weiterbildung ist der Spannkonus auf einer Zugstange angeordnet.

Weiterhin sind vorteilhafterweise die Antriebsglieder des Gurtbandförderers mittels Förderketten ausgebildet. Die Förderketten werden beispielsweise mittels Zahnräder angetrieben. Selbstverständlich ist es auch möglich, daß als Antriebsglieder auch Antriebsriemen vorgesehen sein können.

Als weitere Lösung der Aufgabe wird bei einer Querstrebe für einen Gurtbandförderer eines Tabakzwischenspeichers, insbesondere Mischbox, wobei durch die Querstrebe wenigstens zwei Antriebsglieder des Gurtbandförderers verbindbar sind, vorgeschlagen, daß wenigstens ein Mittel zur lösbaren Verbindung der Querstrebe mit einem zwischen den Arbeitsgliedern angeordneten Gurtband vorgesehen ist.

Gemäß einer bevorzugten Ausführungsform ist das Mittel zur lösbaren Verbindung als Klemmeinrichtung ausgebildet.

Weitere vorteilhafte Ausgestaltungen der Querstrebe ergeben sich aus dem voranstehend beschriebenen Gurtbandförderer. Zur Vermeidung von Redundanzen wird hierauf explizit verwiesen.

Darüber hinaus wird die Aufgabe gelöst durch einen Tabakzwischenspeicher, insbesondere Mischbox, und eine Fördereinrichtung für eine Einrichtung der tabakverarbeitenden Industrie, die mit einem erfindungsgemäßen Gurtbandförderer versehen sind.

Nachfolgend wird die Erfindung anhand eines Ausführungsbeispiels ohne Beschränkung des allgemeinen Erfindungsgedankens in den nachfolgenden Figuren näher beschrieben. Es zeigen:
- Fig. 1: eine Draufsicht auf einen Gurtbandförderer im Ausschnitt;
- Fig. 2: eine erfindungsgemäße Querstrebe im Querschnitt;
- Fig. 3: eine perspektivische Darstellung einer Spanneinrichtung im Detail und
- Fig. 4: eine perspektivische Teilansicht einer Querstrebe.

In den folgenden Figuren sind gleiche Elemente und Teile durch dieselben Bezugsziffern bezeichnet. Von einer erneuten Vorstellung der jeweiligen Elemente und Teile wird in diesen Fällen abgesehen.

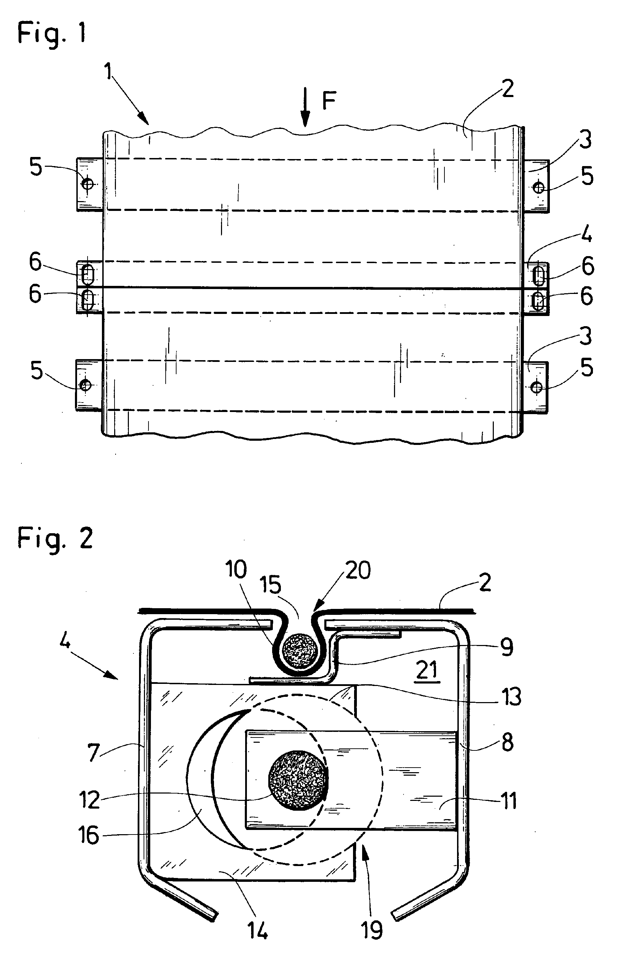

In Fig. 1 ist der Ausschnitt eines Gurtbandförderer 1 in der Draufsicht dargestellt. Der Gurtbandförderer 1 verfügt über ein Gurtband 2, das in eine Förderrichtung F transportiert wird. Unterhalb des Gurtbands 2 werden ebenfalls Querstreben 3, 4 in Förderrichtung F transportiert. Die Querstreben 3, 4 ragen beidseitig über das Gurtband 2 hinaus und weisen auf beiden Seiten Löcher 5 bzw. Langlöcher 6 auf. In die Löcher 5 bzw. Langlöcher 6 können Schrauben oder andere Befestigungsmittel eingesetzt werden, so daß die Querstreben 3, 4 mit jeweils einer hier nicht dargestellten Förderkette auf jeder Seite der Querstreben 3, 4 miteinander verbunden werden.

Die Transportketten auf beiden Seiten der Querstreben 3, 4 werden beispielsweise mittels Zahnräder und eines Motorantriebs gemäß der ausgebildeten Förderrichtung F transportiert. Die Transportketten bzw. der Gurtbandförderer 1 sind in sich geschlossen d.h. endlos und sind am Boden einer Tabakmischbox angeordnet.

Während das Gurtband 2 auf der Querstrebe 3 aufliegt, ist das Gurtband 2 fest und lösbar mit der Querstrebe 4 verbunden (siehe Fig. 2).

Die erfindungsgemäße Querstrebe 4 ist in Fig. 2 im Querschnitt schematisch dargestellt. Die Querstrebe 4 besteht aus zwei, zueinander beweglichen Querprofilen 7, 8, die das aufliegende Gurtband 2 zangenförmig einklemmen. Die angewinkelten Profile 7, 8 der Querstrebe 4 sind derart ausgebildet, daß die Querstrebe 4 auf ihrer Oberseite, d.h. der dem Gurtband 2 zugewandten Seite einen Spalt 15 besitzt. Der Spalt 15 erstreckt sich über die gesamte Länge der Querstrebe 4.

Entsprechend der Stellung der beweglichen Profile 7, 8 ist zum Einlegen des Gurtbands 2 in die Querstrebe 4 der Spalt 15 geöffnet. Nach Einlegen des Gurtbands 2 wird die Breite des Spalts 15 verengt. Zur Verbesserung der Klemmung des Gurtbands 2 wird nach Einlegen des Bandgurts 2 zusätzlich noch eine Stange 10 in den Spalte 15 eingebracht. Dabei umgibt das Gurtband 2 schlaufenförmig die Klemmstange 10. Um die Klemmstange 10 und das Gurtband 2 in den Spalt 15 zu positionieren, ist auf der Unterseite des Profils 8 unterhalb des Spalts 15 eine Halterung 9 vorgesehen, so daß die Klemmstange 10 nicht in die Querstrebe 4 hineinfallen kann.

Die winkeligen Profile 7, 8 bilden einen Innenraum 21 der Querstrebe 4 aus, in dem eine Spanneinrichtung 19 angeordnet ist. Die Spanneinrichtung 19 verfügt über eine längsaxiale verschiebbare Zugstange 12, die mittels mehrerer mit dem Profil 8 verbundenen Halterungen 11 gehalten wird. Zwischen zwei hintereinander angeordneten Halterungen 11 ist ein mit dem anderen Profil 7 der Querstrebe 4 verbundenes Halteteil 14 mit einer Bohrung 16 ausgebildet. Außerdem ist zwischen einer Halterung 11 und dem Halteteil 14 ein Konus 13 axialsymetrisch auf der Zugstange 12 angeordnet. Die Zugstange 12 durchdringt die Bohrung 16 des Halteteils 14. Ferner ist die Mittelachse der Zugstange 12 parallel versetzt zur Mittelachse der Bohrung 16.

Zur Klemmung des Gurtbands 2 mittels der horizontalen Schenkel der Profile 7, 8 wird der Spalt 15 verengt, wobei für eine zuverlässige Klemmung die Breite des Spalts 15 kleiner sein muß als die Summe des Durchmessers der Klemmstange 10 und der doppelten Banddicke des Gurtbands 2.

Um das Gurtband 2 von der Querstrebe 4 zu entfernen, wird die Klemmung gelöst und der Spalt 15 verbreitert. Anschließend kann die Klemmstange 10 entnommen werden, so daß die Verbindung zwischen dem Querprofil 4 und dem Gurtband 2 wieder gelöst ist. Zur Klemmung und zur Lösung der Klemmung werden die Profile 7, 8 der Querstrebe 4 gegeneinander bewegt.

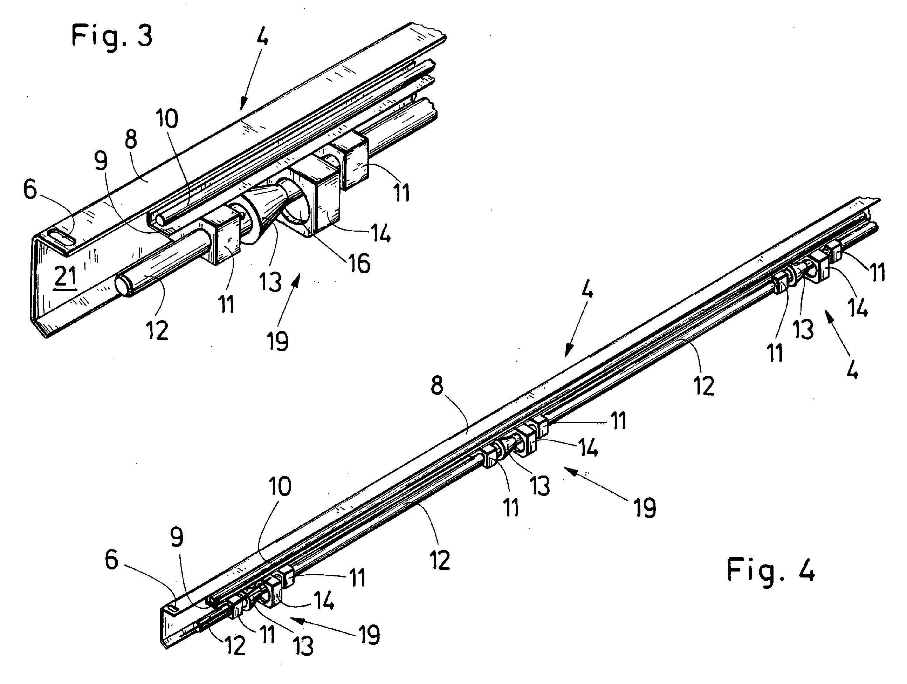

In Fig. 3 ist eine Teilansicht einer Querstrebe 4 perspektivisch dargestellt. Um das Gurtband 2 zu klemmen und zu spannen, werden die Profile 7, 8 (Fig. 2) gegeneinander bewegt. Bei der vorliegenden Darstellung ist aus Gründen der Übersichtlichkeit das Querprofil 7 weggelassen.

Im Innenraum 21 (siehe Fig. 2) des Querprofils 4 sind die Spanneinrichtungen 19 ausgebildet. Die Zugstange 12 der Spanneinrichtung 19 ist parallel zum Spalt 15 angeordnet und mittels Halterungen 11 verschiebbar gelagert. Auf der Zugstange 12 ist ferner der Spannkonus 13 zwischen zwei Halterungen 11 vorgesehen. Zwischen dem zulaufenden Ende des Spannkonus 13 und einer Halterung 11 ist das Halteteil 14 ausgebildet, das mit dem Profil 7 (siehe Fig. 2) verbunden ist. Die Halterungen 11 sind mit dem anderen Profil 8 der Querstrebe 4 fest verbunden. Das Halteteil 14, das mit dem hier nicht dargestellten Querprofil 7 verbunden ist, verfügt über die Bohrung 16, durch die hindurch die Zugstange 12 geführt ist.

Darüber hinaus ist die Achse der Zugstange 12 und die Mittelpunktachse der Bohrung 16 des Halteteils 14 (axial) parallel verschoben angeordnet. Beim längsaxialen Verschieben der Zugstange 12 kann der Abstand zwischen den Profilen 7, 8 der Querstrebe 4 (siehe Fig. 2) variiert und eingestellt werden, da beim Verschieben des Konus 13 die Außenfläche des Konus 13 in die Bohrung 16 eindringt und schließlich die Innenseite der Bohrung 16 berührt. Durch die axial parallele Anordnung der Drehachse des Konus 13 zur Mittelpunktachse der Bohrung 16 kann der Abstand kontinuierlich variiert werden, da sich bei Translation des Konus 13 der Abstand der Profile 7, 8 ändert.

Durch die Spanneinrichtung 19 kann das Gurtband 2 mittels der Querstrebe 4 eingeklemmt und darüber hinaus gespannt werden. Hierzu wird nach Verschieben des Konus 13 bzw. Eindringen des Konus 13 in die Bohrung 16 die Zugstange z.B. mittels einer Schraube fixiert.

In Fig. 4 ist eine perspektivische Übersicht einer Querstrebe 4 im Ausschnitt gezeigt (siehe Fig. 3). In dieser Darstellung sind mehrere Spanneinrichtungen 19 in vorbestimmten, vorzugsweise äquidistanten Abständen auf der Zugstange 12 angeordnet, so daß das mit der Querstrebe 4 verbundene Gurtband 2 über die gesamte Breite der Querstrebe 4 gleichmäßig geklemmt und/oder gespannt werden kann.

Mittels der Erfindung gelingt es, auf zuverlässige und leichte Weise ein Gurtband mit einer Querstrebe eines Gurtbandförderers zu verbinden. Durch die lösbare Verbindung von Gurt und Strebe kann das Gurtband einfach von der Strebe demontiert und gereinigt werden. Anschließend kann ein gereinigtes Gurtband leicht mit den Verbindungsstreben verbunden werden.

### Bezugszeichenliste

- 1: Gurtbandförderer
- 2: Gurtband
- 3: Querstrebe
- 4: Querstrebe
- 5: Löcher
- 6: Langlöcher
- 7: Hohlprofil
- 8: Hohlprofil
- 9: Haltebügel
- 10: Stange
- 11: Halterung
- 12: Zugstange
- 13: Konus
- 14: Halteteil
- 15: Spalt
- 16: Bohrung
- 19: Spanneinrichtung
- 20: Klemmeinrichtung
- 21: Innenraum
- F: Förderrichtung

## Patentansprüche

1. Gurtbandförderer (1) für einen Tabakzwischenspeicher, insbesondere Mischbox, mit wenigstens zwei parallel angeordneten Antriebsgliedern, die mittels wenigstens einer Querstrebe (3, 4) miteinander verbunden sind, und mit wenigstens einem zwischen den Antriebsgliedern angeordneten Gurtband (2), **dadurch gekennzeichnet, daß** das Gurtband (2) lösbar mit wenigstens einer Querstrebe (4) verbunden ist.

2. Gurtbandförderer (1) nach Anspruch 1, **dadurch gekennzeichnet, daß** wenigstens eine Querstrebe (4) mit einer Klemmeinrichtung (20) für das Gurtband (2) versehen ist.

3. Gurtbandförderer (1) nach Anspruch 1 oder 2, **dadurch gekennzeichnet, daß** die Klemmeinrichtung (20) mittels wenigstens zweier, vorzugsweise gegeneinander bewegliche, Profile (7, 8) der Querstrebe (4) ausgebildet ist.

4. Gurtbandförderer (1) nach einem der Ansprüche 1 bis 3, **dadurch gekennzeichnet, daß** wenigstens ein Spalt (15) in der Querstrebe (4) vorgesehen ist, in die das Gurtband (2) einbringbar ist.

5. Gurtbandförderer (1) nach Anspruch 4, **dadurch gekennzeichnet, daß** in den Spalt (15) ein Klemmteil (10) einbringbar ist.

6. Gurtbandförderer (1) nach Anspruch 5, **dadurch gekennzeichnet, daß** das Klemmteil (10) wenigstens teilweise vom Gurtband (2) umgeben ist.

7. Gurtbandförderer (1) nach einem oder mehreren der Ansprüche 1 bis 6, **dadurch gekennzeichnet, daß** eine Haltevorrichtung (9) für das Klemmteil (10) ausgebildet ist.

8. Gurtbandförderer (1) nach einem oder mehreren der Ansprüche 1 bis 7, **dadurch gekennzeichnet, daß** eine Spanneinrichtung (19) für das Gurtband (2), vorzugsweise in der Querstrebe (4), vorgesehen ist.

9. Gurtbandförderer (1) nach Anspruch 8, **dadurch gekennzeichnet, daß** die Spanneinrichtung (19) mit wenigstens einem Spannkonus (13) ausgebildet ist.

10. Gurtbandförderer (1) nach Anspruch 9, **dadurch gekennzeichnet, daß** der Spannkonus (13) auf einer Zugstange (12) angeordnet ist.

11. Gurtbandförderer (1) nach einem oder mehreren der Ansprüche 1 bis 10, **dadurch gekennzeichnet, daß** die Antriebsglieder mittels Förderketten ausgebildet sind.

12. Querstrebe (4) für einen Gurtbandförderer (1) eines Tabakzwischenspeichers, insbesondere Mischbox, wobei durch die Querstrebe (4) wenigstens zwei Antriebsglieder des Gurtbandförderers (1) verbindbar ist, **dadurch gekennzeichnet, daß** wenigstens ein Mittel (20) zur lösbaren Verbindung der Querstrebe (4) mit einem zwischen den Antriebsgliedern angeordneten Gurtbands (2) vorgesehen ist.

13. Querstrebe (4) nach Anspruch 12, **dadurch gekennzeichnet, daß** das Mittel zur lösbaren Verbindung als Klemmeinrichtung (20) ausgebildet ist.

14. Querstrebe (4) nach Anspruch 13, **dadurch gekennzeichnet, daß** die Klemmeinrichtung (20) mittels wenigstens zweier, vorzugsweise gegeneinander bewegliche, Profile (7, 8) der Querstrebe (4) ausgebildet ist.

15. Querstrebe (4) nach Anspruch 14, **dadurch gekennzeichnet, daß** wenigstens ein Spalt (15) in der Querstrebe (4) vorgesehen ist, in die das Gurtband (2) einbringbar ist.

16. Querstrebe (4) nach Anspruch 15, **dadurch gekennzeichnet, daß** in den Spalt (15) ein Klemmteil (10) einbringbar ist.

17. Querstrebe (4) nach Anspruch 16, **dadurch gekennzeichnet, daß** das Klemmteil (10) wenigstens teilweise vom Gurtband (2) umgeben ist.

18. Querstrebe (4) nach einem oder mehreren der Ansprüche 12 bis 17, **dadurch gekennzeichnet, daß** eine Halteeinrichtung (9) für das Klemmteil (10) ausgebildet ist.

19. Querstrebe (4) nach einem oder mehreren der Ansprüche 12 bis 18, **dadurch gekennzeichnet, daß** eine Spanneinrichtung (19) für das Gurtband (2), vorzugsweise in der Querstrebe (4), vorgesehen ist.

20. Querstrebe (4) nach Anspruch 19, **dadurch gekennzeichnet, daß** die Spanneinrichtung (19) mit wenigstens einem Spannkonus (13) ausgebildet ist.

21. Querstrebe (4) nach Anspruch 20, **dadurch gekennzeichnet, daß** der Spannkonus (13) auf einer Zugstange (12) angeordnet ist.

22. Tabakzwischenspeicher, insbesondere Mischbox, mit wenigstens einem Gurtbandförderer (1) nach einem oder mehreren der Ansprüche 1 bis 11.

23. Fördereinrichtung (1) für eine Einrichtung der tabakverarbeitenden Industrie mit einem Gurtbandförderer (1) nach einem oder mehreren der Ansprüche 1 bis 11.
